# EUROPEAN PATENT SPECIFICATION

(11) **EP 2 422 253 B1**
(45) Date of publication and mention of the grant of the patent: **04.11.2020**
(21) Application number: 10716810.6
(22) Date of filing: 20.04.2010
(51) Int. Cl.: G05B 23/02

(54) **IMPROVED PROCESS CONTROL OVERVIEW ON A SUPERVISORY CONTROL SYSTEM DISPLAY UNIT**
VERBESSERTE PROZESSSTEUERUNGS ÜBERSICHT IN EINER ÜBERWACHUNGSSTEUERUNGSSYSTEM-ANZEIGEEINHEIT
APERÇU DE COMMANDE DE PROCÉDÉ AMÉLIORÉ SUR UNE UNITÉ D'AFFICHAGE DE SYSTÈME DE COMMANDE DE SURVEILLANCE

(30) Priority: 22.04.2009 US 202941 P
(43) Date of publication of application: 29.02.2012
(73) Proprietor: ABB Power Grids Switzerland AG, 5400 Baden (CH)
(72) Inventor: VETTER, Claus, CH-5033 Buchs (CH); KOTA, Dilip, 72209 Västerås (SE); MIKKELSEN, Christine, 72591 Västerås (SE)
(74) Representative: Vossius & Partner Patentanwälte Rechtsanwälte mbB
(86) International application number: PCT/EP2010/055214
(87) International publication number: WO 2010/122032

(56) References cited:
- EP-A1- 1 331 536
- US-A1- 2008 141 166
- US-A1- 2008 307 344
- US-B1- 6 833 844

## Description

### FIELD OF THE INVENTION

The present invention generally relates to display units in supervisory control systems provided for technical processes. More particularly the present invention relates to a method for enabling supervision of a technical system, a supervisory control system and computer program products that allow an operator to get an improved process control overview on a display unit also when there is a need for finding additional information.

### BACKGROUND

Operators have the need to view information relating to an element in a supervisory control system for controlling a technical process such as the process of electrical power transmission. The information can include process control data values that are provided by process interface units to a process control system, where the supervisory control system visualizes the process control information in different views and windows. The process control system can be a SCADA (Supervisory Control And Data Acquisition) system and in particular a power grid control system. Such information can be presented in overview pictures.

However an operator of the supervisory control system may need to also see further information in relation to the technical process while still observing such an overview picture.

Normally power grid or other SCADA systems operators have to search for such further information in multiple "pages" or views of the process control system. Such windows are then often related to a certain aspect of an object. An operator may therefore need to open several such windows or scenes, even though only a limited amount of further information may actually be of interest.

It is thus possible that the operator has to keep many pages or views open, which in some cases may be displayed on multiple screens or display devices, in order to see just a few interesting pieces of information in each such view. This may make it hard for the operator to have an overview of the information being presented in the ordinary overview picture he or she is monitoring. Even if the number of additional windows being opened is small, the opening up of new views may distract the operator.

EP 1 331 536 discloses a guidance picture that can be displayed on a display in an overlapped state over a plant base layer picture, a process-based layer picture or a first layer picture. The guidance picture is associated with an alarm, which may be represented by a symbol on the display. The guidance picture is furthermore only displayed after clicking or activating the symbol of the alarm. This is thus done in order for displaying activities that can be made in relation to an alarm. It also seems like the guidance picture is not available unless an alarm is present.

Document US 2008/0141166 A1 relates to a graphical user interface for visualizing and controlling a computer network, wherein context-sensitive help relating to elements of the graphical representation may be immediately available, responsively to a selection device.

In view of what has been described above there exist different solutions for visualizing information for an operator of a supervisory control system. However, there is in this regard room for improvement, especially with regard to providing additional information while retaining the overview of a picture being presented.

### SUMMARY OF THE INVENTION

The present invention addresses this situation. The invention is therefore directed towards solving the problem of improving user friendliness in relation to presentation of an overview picture on a display unit in a supervisory control system.

Accordingly, the present invention is based on the realization that there is a need for a better visualization of process control information when displaying an overview picture.

The present invention is therefore directed towards solving the problem of providing a better and more user-friendly visualization of process control information when an overview picture is displayed.

This problem is according to a first aspect of the invention solved through a supervisory control system for supervising a technical system, the supervisory control system comprising a display unit for displaying an overview picture of said technical system or part of said technical system, said overview picture comprising at least one object, wherein the supervisory control system further comprises a display view displaying the overview picture together with a detailed information view at least partly overlapping the overview picture, the detailed information view being associated with the object and comprising detailed information of the object.

This problem is according to a second aspect of the invention solved through a method for enabling supervision of a technical system, said method being implemented in a supervisory control system comprising a display unit showing an overview picture of the technical system, the method comprising the steps of: receiving input signals indicating a selection of at least one object of interest shown in said overview picture, and
displaying, in response to receiving the input signals, a detailed information view at least partly overlapping the overview picture, the detailed information view being associated with the object and comprising detailed information of the object, whereby supervision of the technical system is enabled.

This problem is according to a third aspect of the invention solved through computer program products implementing the method.

The invention eliminates the need of showing all the pages or views that contain information, including but not limited to real-time information, which the operator wants to view in addition to the overview picture. This is furthermore done in a simple way without the operator having to be distracted or perform other activities or switch to other pictures. This is furthermore also done without clogging the overview picture with a lot of additional information.

### BRIEF DESCRIPTION OF THE DRAWINGS

The present invention will in the following be described with reference being made to the accompanying drawings, where
Fig. 1 schematically shows a computerized supervisory system for a technical process,
Fig. 2 schematically shows an operator terminal of the supervisory system,
Fig. 3A schematically shows a geographical overview picture of a power transmission system including a number of process control entities in the form of substations together with a pointing and selection tool and a graphical object representing a process control entity in the form of a substation,
Fig. 3B schematically shows the geographical overview picture of the power transmission system with the pointing and selection tool, graphical substation symbol as well as a graphical symbol in the form of a further information icon associated with the substation object,
Fig. 3C schematically shows the geographical overview picture of the power transmission system and object as the further information icon is selected using the pointing and selection tool,
Fig. 3D schematically shows a further information window associated with the object and further information icon together with the geographical overview picture,
Fig. 4 schematically shows a flow chart of a number of method steps being performed in a method according to the invention, and
Fig. 5 schematically shows a computer program storage means comprising a computer program product providing the functionality of the method according to the invention.

### DETAILED DESCRIPTION OF THE INVENTION

In the following, embodiments of the invention providing the above described functionality will be described.

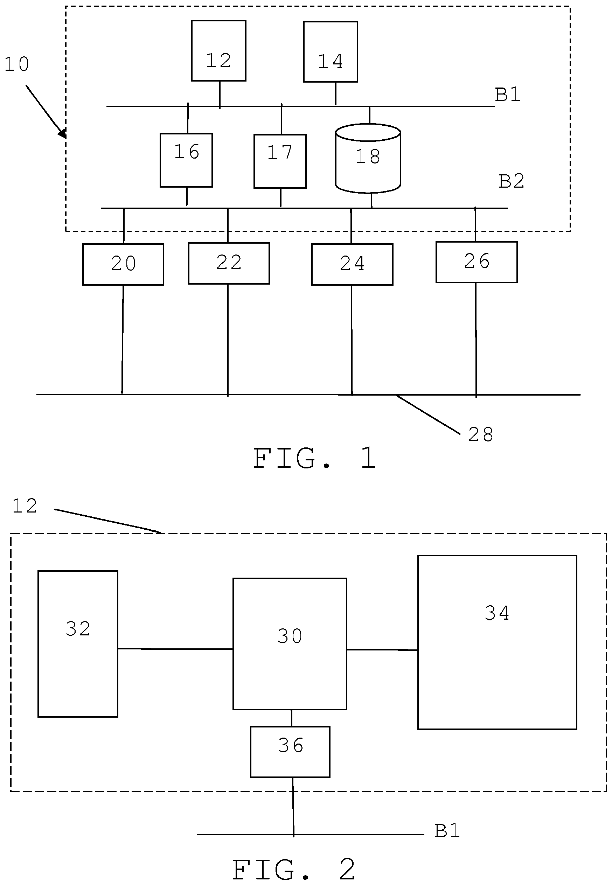

Fig. 1 schematically shows an exemplifying computerized supervisory control system or process control system 10. The process control system 10 may typically be an object based computerized system for controlling a technical process or perhaps part of a technical process. Typical technical processes are for example electrical power generation, transmission and/or distribution processes, water purification and/or distribution processes, oil and/or gas production and distribution processes, petrochemical, chemical, pharmaceutical and food processing processes, as well as pulp and paper production processes. These are just some examples of technical processes where the supervisory control system or process control system 10 can be applied. There exist countless other technical processes. One preferred field where the present invention is to be applied is a power transmission system. Therefore the invention will in the following be described in relation to such a process. The technical process may be monitored by a user or operator through an operator terminal, which communicates with a control server handling monitoring and control of the technical process.

In fig. 1 the process control system 10 therefore includes a number of operator and engineering terminals 12 and 14 connected to a first bus B1. There is furthermore a second bus B2 and between the first and second busses there are connected a first server 16 providing control of the process, a second server 17 providing monitoring of the process and a database 18 where data relating to control and possibly monitoring of the process is stored. Such data is here also called process control data. To the second bus there are furthermore connected process interface units for providing control and measurements in the system 10. The first server 16 is therefore a part of a control system, while the second server 17 is a part of a monitoring system. In the figure 1, there are provided four such process interface units 20, 22, 24 and 26 connected to a power line 28. It should here be realized that some of these may only be provided for control, some only for measurements and some for both control and measurements. Such process interface units are thus involved in controlling the electrical power transmission process or measuring properties of the controlled process as well as properties or status of control and measurement units. Process interface units can include elements directed towards measuring quantities such as current, voltage and power. These elements can be current transformers and voltage transformers. The process interface units can also or instead include elements directed towards control operations like circuit breakers, relays, power semiconductor switches and tap changers. These are just a few of several different possible types of elements that can be provided in process interface units. A processes interface unit can furthermore be a part of a process interface device, which means that a process interface device is provided on one hierarchical level, while a process interface unit is provided on another, lower hierarchical level.

The first server 16 here receives measurements of the process via the process interface units and controls the process via the process interface units based on these measurements. It also stores historical process control data in the data base 18. The second server 17 receives measurements via the process interface units as well as status data concerning the operation of process interface units and can generate alarm and event data that may be presented via the operator terminals 12 and 14. It can also shut down the process. Also alarm and event data may be stored in the database 18.

In the example of figure 1, a so called Network Manager system runs on the process control system 10, which belongs to the group of SCADA (Supervisory Control And Data Acquisition) systems. The Network Manager system is particularly intended for the supervision and control of power transmission systems or gas systems.

An operator terminal 12 and 14 in the process control system 10 provide each a user interface to the Network Manager system. In the following, the details of such an operator terminal are explained based on the example of operator terminal 12, shown in figure 2. The operator terminal 12 includes a user input unit 32, a display unit 34, a control unit 30 and an interface 36 for communicating with the system 10 via the first bus B1. As mentioned above, the operator terminal provides a graphical user interface for an operator of the process control system 10. The control unit 30 may be a processor with an associated program memory including program code for performing the functionality of the present invention. This functionality will be described later on. The user input unit 32 is a unit through which a user of the operator terminal 12 may enter data. As such it may be a keyboard, a keypad or a pointing and selection tool like a mouse. A combination of these may be also be used. It may also be combined with the display unit 34 in order to form a touch screen. The operator terminal 12 may also include other user interfaces such as a speaker or a microphone in order to present and receive data to and from one or more users of the operator terminal in other ways than through the display and keyboard. An operator terminal in a process control system is only one example of a computer in which the present invention may be realized.

Process control data values from the various process interface units can be collected and stored in the history data base 18 by the first server 16 as well as presented in real-time to an operator via the operator terminal display 34.

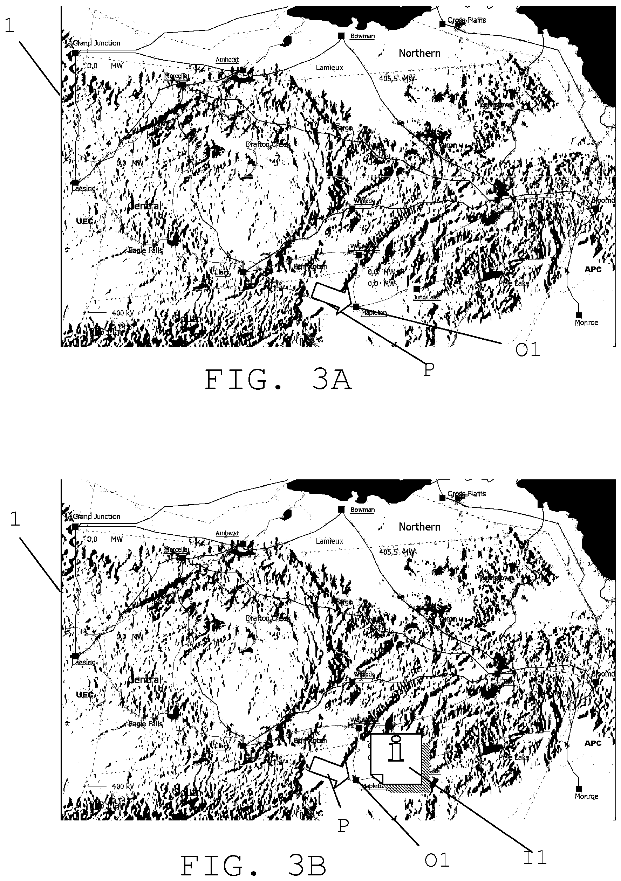

An operator terminal of the supervisory system shows process control elements and process control devices involved in the control of the technical process. These elements and devices are then often shown in a number of different windows, where a window may be provided for one hierarchical system level. It is furthermore possible with other types of windows, like windows depicting data according to data type. It is for instance possible to display the general outline of the system on a geographical overview picture, which picture may show power lines connected to substations. This is a system view at a first hierarchical level. Such an overview picture is schematically shown in fig. 3A - E. However, a system normally includes further system views at other hierarchical levels, for instance at lower system levels. It is as an example possible to show the internal structure of a substation, for instance in a single line diagram, as well as the structure of an element on a lower hierarchical level, such as a transformer, converter or some other element in a substation in an overview picture. In all these views it is at the same time possible to also display data of the functioning of the elements and devices in question, such as power being transmitted via a power line, voltage levels and current levels. It is also possible to show event and status data such as alarms. Alarms may also be displayed in a separate view in an alarm list.

With all this information that can be shown in various windows on an operator terminal, an operator may need to open up a number of windows in parallel for obtaining information in relation to an object such as a substation. This may lead to an "overflow" of information, where it is impossible to discern important information from less important and above all to get a clear grasp of to which object in an overview picture such data is linked.

The present invention is provided for resolving this and other related problems.

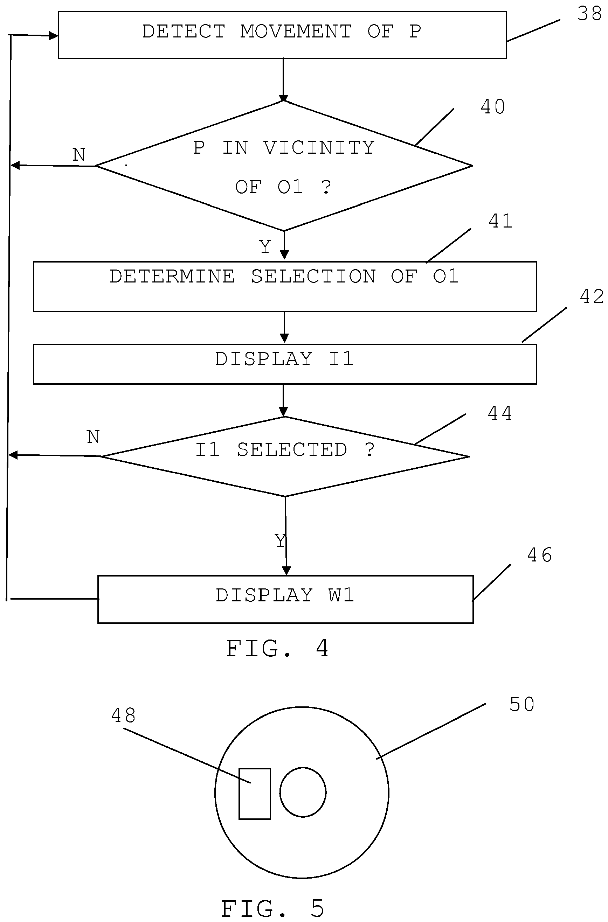

One embodiment of the invention will therefore now be described with reference being made to fig. 3 A-D, where a number of display views presented on the work station are shown, and to fig. 4, which shows a flow chart of a number of method step being performed in the method according to the first embodiment of the present invention.

On the display unit 34 of the work station 12 there is shown an overview picture 1 of the technical process or a part of the technical process, which overview picture here shows a number of interconnected substations, which substations are interconnected with power lines. These are presented as a number of graphical objects on a geographical map, which objects thus represent a process control entity, i.e. an entity involved in the control of the process. In this embodiment the process control entity is furthermore a process control device. It is according to the invention possible to obtain further information about these objects.

This overview picture is just one type of overview picture with which the present invention can be used. It is for instance also possible to use the present invention in overview pictures on elements further down in the hierarchy, such as an overview picture of a substation or an overview picture of an element in a substation like a transformer. It is also possible to show overview pictures at higher levels. The overview picture need furthermore not be geographical but can be a logical overview picture such as an overview of the electrical interconnection of elements, like a single line diagram.

As is known in these types of systems the work station also provides a pointing and selection tool for the operator, such as a cursor or pointer, in which various locations of the overview picture 1 can be selected or marked. In fig. 3A - D this pointer P is shown as an arrow. The work station can therefore detect the positions of the pointer P on the display unit 34 and determine what objects are provided close to such positions. It is also possible to select an object with this pointer, for instance in combination with actuating a user input unit, such as clicking using a mouse or track ball or with a tapping on a touch screen. This means that through moving the tool P on the display unit 34 using a user input unit, the control unit 30 of the work station will receive input signals related to selections made by the operator.

In the following the method will furthermore be described in relation to one such object on the overview picture. In this example the object O1 is a graphical object representing a power control device that is a substation and here a substation named "Mapleton". It should be realized that the method steps described below can be applied on other objects in the overview picture, like objects representing other substations or power lines. The method may be possible to perform in relation to all objects in an overview picture. However, it is also possible that it is limited to only some types of objects, for instance objects representing process interface devices or process interface units or objects representing other types of elements, such as elements used for transfer of power. It is for instance possible that the method steps to be described are only performed in relation to substations, but are not possible to perform in relation to other objects such as power lines. The method can also be performed on objects in lower hierarchical levels. It is for instance possible to perform the method steps for an object in an overview picture of a substation, for instance single line diagram, where an object may then for instance be a process interface unit comprising an element such as a transformer.

As the operator thus moves the pointer P on the screen 34 across the overview picture 1, the control unit 30 detects the movement of it, step 38. It then investigates if the pointer P is in the vicinity of the first object 01. This may be done through comparing the position of the pointer P with the position of the object 01. It can also be the comparison of the position of the pointer P with an area, like a rectangle, square, circle or ellipse surrounding the object 01. The tool P may then be found to be in the vicinity of the object 01, if the pointer P has the same position as the object O1 or is within the area surrounding the object 01. The situation that the pointer is in the vicinity of the object 01, is schematically shown in fig. 3A. It is therefore clear that movement of the pointer P to the vicinity of the object O1 means that the control unit 30 receives input signals via a mouse or other user input unit indicating a selection of the object O1 shown in the overview picture. The control unit 30 can therefore be considered to comprise means for receiving input signals indicating a selection of an object of interest shown in the overview picture.

If then the pointer P is found to have a position in the vicinity of the object, step 40, the control unit 30 determines that the object is selected, step 41. This is then followed by the control unit 30 displaying a graphical symbol indicating the presence of the further information. In this embodiment the control unit 30 displays a further information icon I1 associated with the object on the display unit, step 42. However, if the pointer is not in the vicinity of the object, step 40, the movement is again detected, step 38. This means that if the position of the pointer P is the same as the position of the object O1 or inside the area surrounding the object 01, then the control unit 30 makes sure that the further information icon I1 is presented. The presenting of the icon I1 is shown in fig. 3B. This icon I1 is thus presented merely through the movement of the pointer P and without the object O1 having to be manipulated, for instance selected or clicked on. It is sufficient that the pointer P hovers above the icon 01.For this reason the control unit 30 can also be considered to comprise means for displaying a graphical symbol indicating the presence of the further information if the object is selected.

In this way it is possible for the operator to see that there is further information in relation to an object without having the overview cluttered with a lot of further information and without blocking the overview picture with other windows and screens. This icon I1 provides an easily seen indicator to the operator that there exists further information about the object. The size of this indicator is furthermore small and therefore only occupies a small part of the screen and thus only provides a marginal disturbance of the overview.

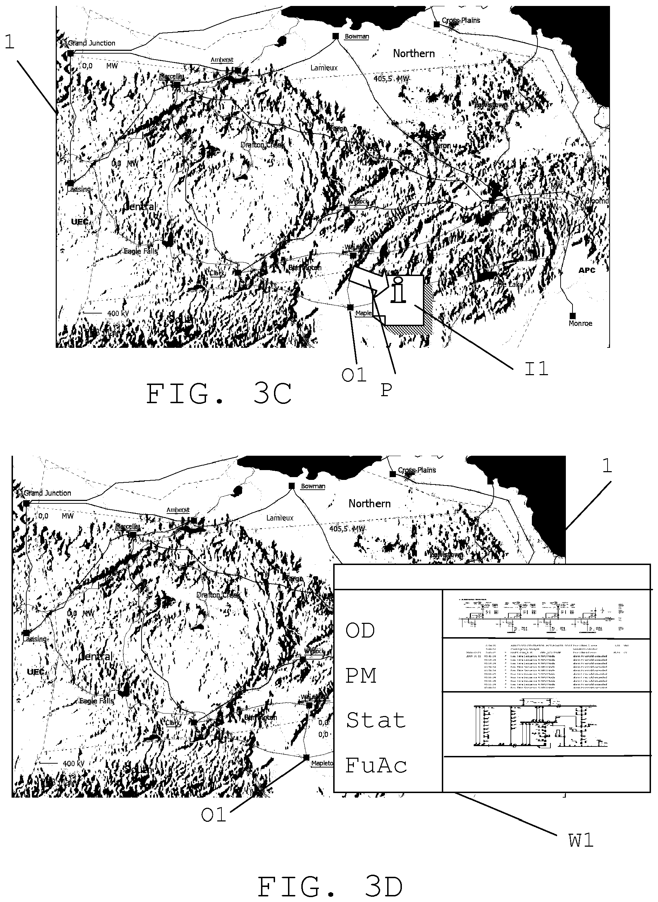

It is then possible for the operator to see at least some of this further information in a detailed information view, which may be made possible through the operator moving the pointer P to the icon I1 and selecting this icon, which is schematically shown in fig. 3C. A selection of the icon can be made in the same way through the operator merely moving the tool P over an area covered by this icon. This is the case in the first embodiment. A selection of the icon can also be made through keeping the pointer P above the object O1 also after the icon I1 is shown. It is also possible to require some more active participation of the operator such as a clicking on the icon. The control unit of the work station in this way detects if the icon is selected or not, step 44, and if it is selected the detailed information view is displayed. In this embodiment, the detailed information view is displayed through displaying a further information window W1, step 46. However if the icon is not selected, step 44, the movement of the tool P is again investigated, step 38. If the pointer is moved away from the icon and object 01, these will furthermore disappear.

The presenting of the further information window W1 is schematically shown in fig. 3D. As can be seen here the window is shown over a part of the overview picture. However, the window W1 is fairly small, why the overview is still good. For this reason the control unit can also be considered to comprise means for displaying, on the display unit, a detailed information view W1 for the object O1 at least partly overlapping the overview picture 1, which is furthermore done based on the reception of the input signals from the user input unit. Since this detailed information view in this first embodiment is only displayed if both object and icon are selected, it is clear that the means for displaying the detailed information view is configured to only display this detailed information view if input signals are received indicating a selection of the icon.

In this way the overview picture is thus retained while the additional information is presented.

In the window W1 it may be possible to present a number of pieces of additional information such as information about what content is linked to the object. This additional information may be information originally appearing in several different other overview pictures. As an example fig. 3D shows a first piece of overview data OD. This data can be context data relating to the object like weather information. It is also possible that there is process measurement data PM, such as process data measured at the process control device or process control element, like power, voltage and current data. This data can be data from a variety of data sources inside the control system and outside the control system. It is also possible that the data includes statistical data Stat, like sizes and dates of power flows, and further activities data FuAc like following actions such as switching operations, alarm acknowledgement, etc. The control unit may thus receive input commands related to a certain action in the technical process, such as tripping a circuit breaker, and then that action is effectuated. It is of course also possible to display alarm data.

It is here also possible that the window includes small sized displays of further «navigatable» pictures, i.e. a set of miniaturized selectable overview pictures, which pictures are different from the overview picture currently displayed. These may here be selected and then the overview picture switched according to the selection. As an example there is here shown a single line diagram of the station, an alarm list and a circuit diagram of an element in the station. All these various elements and diagrams can be selected in the detailed information view and then it is possible that the overview picture is replaced by a screen with the selected data or view. This means that the control unit can also be considered to include means for receiving input signals indicating a selection of a miniaturized overview picture and means for displaying the selected overview picture as a new overview picture.

The window W1 may here furthermore be customized to the operator, for instance include measurements, alarms and small sized views of favorite items of the operator. It may also be customized to the object type, so that all objects of the same type, for instance all substations, have the same type of additional information. It is also possible to adapt the content independently for an object. The presenting and selection of data can therefore be configured by the operator, perhaps subject to access rights to the information. This configuration can be made separately for each object as well as according to each object per object type and adapted according to power system state. This means that the occurrence of an alarm may determine what information should be provided in the window. Normally though the additional information window is always available to an operator, i.e. it can always be selected independently of the system state. However, the content of the window may be depending on the system state. It is furthermore possible that the window can be "pinned" or provided as a permanent window on to the screen. The exemplifying widow is an opaque window. However, it is also possible that it is made transparent or half way transparent in order to allow the overview picture to be visible behind it.

It should also be realized that the further information icon need not be displayed. It may be possible to directly select the detailed information view from the object in the overview picture.

The invention eliminates the need of showing all the pages or views that contain information, including but not limited to real-time information, which the operator wants to view in addition to the overview picture. This is furthermore done in a simple way without the operator having to be distracted or perform other activities or switch to other pictures. This is furthermore also done without clogging the overview picture with a lot of additional information.

The operator terminal may, as was previously described, preferably be provided in the form of one or more processors together with computer program memory including computer program code for performing the present invention. This computer program code may also be provided on one or more data carriers which performs the functionality of the present invention when the program code thereon is being loaded in an operator terminal.

The invention may therefore also be provided as a computer program product loadable into a computer of the supervisory control system, comprising software code portions for carrying out the method according to the invention. It may also be provided as a computer program product stored on a computer readable storage medium, comprising computer readable program code means for causing a computer of a supervisory control system, to carry out the method of the invention. Such a computer readable storage medium in the for of CD ROM disk 50 carrying such a computer program product in the form of computer program code 48 or software code portions is schematically shown in fig. 5.

## Claims

1. A supervisory control system (10) for supervising a technical system, said supervisory control system (10) comprising a display unit (34) for displaying an overview picture (1) of said technical system or part of said technical system, said overview picture (1) comprising at least one object (O1) representing an entity of the technical system, said supervisory control system (10) further comprising
- a display view displaying said overview picture (1) together with a detailed information view (W1) at least partly overlapping said overview picture, said detailed information view being associated with the object and comprising detailed information about the entity represented by the object,
- means for receiving input signals indicating a selection of the object (O1) shown in said overview picture (1)
- means for displaying a graphical symbol indicating the presence of said further information if the object is selected, and
- means for displaying, on said display unit, said detailed information view (W1) only if input signals are received indicating a selection of said graphical symbol.

2. The supervisory control system (10) as claimed in claim 1, wherein said input signals include position data of a pointing and selection tool (P) of the display unit and further comprising means for determining that the object is selected if the position of the pointing and selection tool is in the vicinity of the position of the object.

3. The supervisory control system according to claim 2, wherein the object is determined to be selected without further actuation of a user input unit.

4. The supervisory control system according to one of claims 1 to 3, wherein the overview picture is a geographical overview picture of a power transmission system.

5. The supervisory control system according to one of claims 1 to 3, further comprising means for displaying said detailed information view (W1) in an opaque or transparent manner over said overview picture (1).

6. The supervisory control system according to one of claims 1 to 3, further comprising means for receiving, in said detailed information view, input commands related to a certain action in the technical process, such as tripping a circuit breaker, and effectuating said action.

7. The supervisory control system according to one of claims 1 to 3, wherein said detailed information view comprises a set of other miniaturized selectable overview pictures.

8. The supervisory control system according to claim 7, further comprising means for receiving input signals indicating a selection of a miniaturized overview picture and means for displaying the selected overview picture as a new overview picture.

9. A method for enabling supervision of a technical system, said method being implemented in a supervisory control system (10) comprising a display unit (34) showing an overview picture (1) of said technical system, **characterized by** the steps of:
- receiving (38, 40) input signals indicating a selection of at least one object (O1) of interest shown in said overview picture (1),
- displaying (42) a graphical symbol (II) indicating a presence of further information about an entity of the technical system represented by the object, if the object is selected,
- receiving input signals indicating a selection of said graphical symbol, and
- displaying (46), in response to receiving said input signals, a detailed information view (W1) at least partly overlapping said overview picture, said detailed information view comprising said further information, whereby supervision of said technical system is enabled.

10. The method as claimed in claim 9, wherein said input signals include position data of a pointing and selection tool (P) of the display unit and further comprising the step of determining (41) that the object is selected if (40) the position of the pointing and selection tool is in the vicinity of the position of the object.

11. The method according to claim 10, further comprising the step of determining that the object is selected without actuating a user input unit.

12. The method as claimed in any of claims 9 to 11, further comprising the steps of receiving, in said detailed information view (W1), input commands related to a certain action, such as tripping a circuit breaker, and effectuating said action.

13. The method as claimed in any of claims 9 to 11, comprising the further step of displaying said detailed information view (W1) in an opaque or transparent manner over said overview picture (1).

14. The method as claimed in any of claims 9 to 11, wherein said detailed information view comprises a set of other miniaturized selectable overview pictures, comprising the further steps of receiving input signals indicating a selection of a miniaturized overview picture and displaying the selected overview picture as a new overview picture.

15. A computer program product (48) stored on a computer readable storage medium (50) and loadable into a computer (12) of a supervisory control system (10), comprising software code portions for carrying out the method as claimed in any of claims 9 - 14 when said product is run on said computer (12).

## Patentansprüche

1. Ein Überwachungssteuersystem (10) zum Überwachen eines technischen Systems, wobei das Überwachungssteuersystem (10) eine Anzeigeeinheit (34) zum Anzeigen eines Übersichtsbildes (1) des technischen Systems oder eines Teils des technischen Systems umfasst, wobei das Übersichtsbild (1) mindestens ein Objekt (O1), das eine Entität des technischen Systems repräsentiert, umfasst, wobei das Überwachungssteuersystem (10) ferner Folgendes umfasst:
- eine Anzeigesicht, die das Übersichtsbild (1) zusammen mit einer Sicht detaillierter Informationen (W1), die das Übersichtsbild zumindest teilweise überdeckt, anzeigt, wobei die Sicht detaillierter Informationen dem Objekt zugeordnet ist und detaillierte Informationen über die durch das Objekt repräsentierte Entität enthält,
- Mittel zum Empfangen von Eingangssignalen, die eine Auswahl des Objekts (O1), das in dem Übersichtsbild (1) gezeigt wird, angeben,
- Mittel zum Anzeigen eines grafischen Symbols, das das Vorhandensein der weiteren Informationen angibt, wenn das Objekt ausgewählt wird, und
- Mittel zum Anzeigen auf der Anzeigeeinheit der Sicht detaillierter Informationen (W1) nur dann, wenn Eingangssignale empfangen werden, die eine Auswahl des grafischen Symbols angeben.

2. Das Überwachungssteuersystem (10) nach Anspruch 1, wobei die Eingangssignale Positionsdaten eines Zeige- und Auswahlwerkzeugs (P) der Anzeigeeinheit enthalten, und das ferner Mittel umfasst, um zu bestimmen, dass das Objekt ausgewählt ist, wenn die Position des Zeige- und Auswahlwerkzeugs in der Nähe der Position des Objekts ist.

3. Das Überwachungssteuersystem nach Anspruch 2, wobei bestimmt wird, dass das Objekt ohne eine weitere Betätigung einer Anwendereingabeeinheit ausgewählt ist.

4. Das Überwachungssteuersystem nach einem der Ansprüche 1 bis 3, wobei das Übersichtsbild ein geografisches Übersichtsbild eines Leistungsübertragungssystems ist.

5. Das Überwachungssteuersystem nach einem der Ansprüche 1 bis 3, das ferner Mittel zum Anzeigen der Sicht detaillierter Informationen (W1) in einer opaken oder transparenten Weise über dem Übersichtsbild (1) umfasst.

6. Das Überwachungssteuersystem nach einem der Ansprüche 1 bis 3, das ferner Mittel zum Empfangen in der Sicht detaillierter Informationen von Eingabebefehlen bezüglich einer bestimmten Handlung in dem technischen Prozess, wie etwa Auslösen eines Stromunterbrechers, und Bewirken der Handlung umfasst.

7. Das Überwachungssteuersystem nach einem der Ansprüche 1 bis 3, wobei die Sicht detaillierter Informationen eine Gruppe anderer miniaturisierter auswählbarer Übersichtsbilder umfasst.

8. Das Überwachungssteuersystem nach Anspruch 7, das ferner Mittel zum Empfangen von Eingangssignalen, die eine Auswahl eines miniaturisierten Übersichtsbildes angeben, und Mittel zum Anzeigen des ausgewählten Übersichtsbildes als ein neues Übersichtsbild umfasst.

9. Ein Verfahren zum Ermöglichen einer Überwachung eines technischen Systems, wobei das Verfahren in einem Überwachungssteuersystem (10), das eine Anzeigeeinheit (34) umfasst, die ein Übersichtsbild (1) des technischen Systems zeigt, implementiert ist, **gekennzeichnet durch** die folgenden Schritte:
- Empfangen (38, 40) von Eingangssignalen, die eine Auswahl mindestens eines interessierenden Objekts (O1), das in dem Übersichtsbild (1) gezeigt wird, angeben,
- Anzeigen (42) eines grafischen Symbols (I1), das ein Vorhandensein von weiteren Informationen über eine Entität des technischen Systems, die durch das Objekt repräsentiert wird, angibt, wenn das Objekt ausgewählt wird,
- Empfangen von Eingangssignalen, die eine Auswahl des grafischen Symbols angeben, und
- Anzeigen (46) als Reaktion auf das Empfangen der Eingangssignale einer Sicht detaillierter Informationen (W1), die das Übersichtsbild zumindest teilweise überdeckt, wobei die Sicht detaillierter Informationen die weiteren Informationen umfasst, wodurch die Überwachung des technischen Systems ermöglicht wird.

10. Das Verfahren nach Anspruch 9, wobei die Eingangssignale Positionsdaten eines Zeige- und Auswahlwerkzeugs (P) der Anzeigeeinheit enthalten, und das ferner den Schritt des Bestimmens (41), dass das Objekt ausgewählt ist, wenn (40) die Position des Zeige-und Auswahlwerkzeugs in der Nähe der Position des Objekts ist, umfasst.

11. Das Verfahren nach Anspruch 10, das ferner den Schritt des Bestimmens, dass das Objekt ohne eine weitere Betätigung einer Anwendereingabeeinheit ausgewählt ist, umfasst.

12. Das Verfahren nach einem der Ansprüche 9 bis 11, das ferner die Schritte des Empfangens in der Sicht detaillierter Informationen (W1) von Eingabebefehlen bezüglich einer bestimmten Handlung, etwa Auslösen eines Stromunterbrechers, und des Bewirkens der Handlung umfasst.

13. Das Verfahren nach einem der Ansprüche 9 bis 11, das ferner den Schritt des Anzeigens der Sicht detaillierter Informationen (W1) in einer opaken oder transparenten Weise über dem Übersichtsbild (1) umfasst.

14. Das Verfahren nach einem der Ansprüche 9 bis 11, wobei die Sicht detaillierter Informationen eine Gruppe anderer miniaturisierter auswählbarer Übersichtsbilder umfasst, das die weiteren Schritte des Empfangens von Eingangssignalen, die eine Auswahl eines miniaturisierten Übersichtsbildes angeben, und des Anzeigens des ausgewählten Übersichtsbildes als ein neues Übersichtsbild umfasst.

15. Ein Computerprogrammprodukt (48), das auf einem computerlesbaren Speichermedium (50) gespeichert ist und in einen Computer (12) eines Überwachungssteuersystems (10) ladbar ist und das Software-Codeteile zum Ausführen des Verfahrens nach einem der Ansprüche 9-14, wenn das Produkt auf dem Computer (12) ausgeführt wird, enthält.

## Revendications

1. Un système de commande de surveillance (10) pour surveiller un système technique, ce système de commande de surveillance (10) comprenant un dispositif d'affichage (34) pour afficher une image d'ensemble (1) dudit système technique ou d'une partie dudit système technique, ladite image d'ensemble (1) comprenant au moins un objet (O1) représentant une entité du système technique, ledit système de commande de surveillance (10) comprenant en outre :
- une vue d'affichage affichant ladite image d'ensemble (1) avec une vue d'informations détaillées (W1) chevauchant au moins partiellement ladite image d'ensemble, ladite vue d'informations détaillées étant associée à l'objet et comprenant des informations détaillées sur l'entité représentée par l'objet,
- un moyen pour recevoir des signaux d'entrée indiquant une sélection de l'objet (O1) montré dans ladite image d'ensemble (1),
- un moyen pour afficher un symbole graphique indiquant la présence desdites autres informations si l'objet est sélectionné, et
- un moyen pour afficher, sur ledit dispositif d'affichage, ladite vue d'informations détaillées (W1) seulement si des signaux d'entrée sont reçus indiquant une sélection dudit symbole graphique.

2. Le système de commande de surveillance (10) selon la revendication 1, dans lequel lesdits signaux d'entrée comprennent des données de position d'un outil de pointage et de sélection (P) du dispositif d'affichage et comprenant en outre un moyen pour déterminer que l'objet est sélectionné si la position de l'outil de pointage et de sélection est à proximité de la position de l'objet.

3. Le système de commande de surveillance selon la revendication 2, dans lequel l'objet est déterminé comme étant sélectionné sans autre actionnement d'une unité d'entrée utilisateur.

4. Le système de commande de surveillance selon une des revendications 1 à 3, dans lequel l'image d'ensemble est une image d'ensemble géographique d'un système de transport d'énergie.

5. Le système de commande de surveillance selon une des revendications 1 à 3, comprenant en outre un moyen pour afficher ladite vue d'informations détaillées (W1) d'une manière opaque ou transparente sur ladite image d'ensemble (1).

6. Le système de commande de surveillance selon une des revendications 1 à 3, comprenant en outre un moyen pour recevoir, dans ladite vue d'informations détaillées, des commandes d'entrée liées à une certaine action dans le processus technique, telle que le déclenchement d'un disjoncteur, et pour exécuter ladite action.

7. Le système de commande de surveillance selon une des revendications 1 à 3, dans lequel ladite vue d'informations détaillées comprend un ensemble d'autres images d'ensemble miniaturisées pouvant être sélectionnées.

8. Le système de commande de surveillance selon la revendication 7, comprenant en outre un moyen pour recevoir des signaux d'entrée indiquant une sélection d'une image d'ensemble miniaturisée et un moyen pour afficher ladite image d'ensemble sélectionnée comme une nouvelle image d'ensemble.

9. Un procédé pour permettre la surveillance d'un système technique, ledit procédé étant mis en œuvre dans un système de commande de surveillance (10) comprenant un dispositif d'affichage (34) montrant une image d'ensemble (1) dudit système technique, **caractérisé par** les étapes consistant à :
- recevoir (38, 40) des signaux d'entrée indiquant une sélection d'au moins un objet (O1) d'intérêt montré dans ladite image d'ensemble (1),
- afficher (42) un symbole graphique (Il) indiquant une présence d'autres informations sur une entité du système technique représenté par l'objet, si l'objet est sélectionné,
- recevoir des signaux d'entrée indiquant une sélection dudit symbole graphique, et à
- afficher (46), en réponse à la réception desdits signaux d'entrée, une vue d'informations détaillées (W1) chevauchant au moins partiellement ladite image d'ensemble, ladite vue d'informations détaillées comprenant lesdites autres informations, comme quoi la surveillance dudit système technique est activée.

10. Le procédé selon la revendication 9, dans lequel lesdits signaux d'entrée comprennent des données de position d'un outil de pointage et de sélection (P) du dispositif d'affichage et comprenant en outre l'étape consistant à déterminer (41) que l'objet est sélectionné si (40) la position de l'outil de pointage et de sélection est à proximité de la position de l'objet.

11. Le procédé selon la revendication 10, comprenant en outre l'étape consistant à déterminer que l'objet est sélectionné sans actionner d'unité d'entrée utilisateur.

12. Le procédé selon l'une quelconque des revendications 9 à 11, comprenant en outre les étapes consistant à recevoir, dans ladite vue d'informations détaillées (W1), des commandes d'entrée liées à une certaine action, telle que le déclenchement d'un disjoncteur, et à exécuter ladite action.

13. Le procédé selon l'une quelconque des revendications 9 à 11, comprenant l'étape supplémentaire consistant à afficher ladite vue d'informations détaillées (W1) d'une manière opaque ou transparente sur ladite image d'ensemble (1).

14. Le procédé selon l'une quelconque des revendications 9 à 11, dans lequel ladite vue d'informations détaillées comprend un ensemble d'autres images d'ensemble miniaturisées pouvant être sélectionnées, comprenant les étapes supplémentaires consistant à recevoir des signaux d'entrée indiquant une sélection d'une image d'ensemble miniaturisée et à afficher l'image d'ensemble sélectionnée comme une nouvelle image d'ensemble.

15. Un produit programme informatique (48) stocké sur un support de stockage lisible par ordinateur (50) et pouvant être chargé dans un ordinateur (12) d'un système de commande de surveillance (10), comprenant des parties de code de logiciel pour exécuter le procédé selon l'une quelconque des revendications 9 à 14 lorsque ledit produit est exécuté sur ledit ordinateur (12).
